# EUROPEAN PATENT APPLICATION

(11) **EP 4 686 012 A1**
(43) Date of publication of application: **28.01.2026**
(21) Application number: 24780623.5
(22) Date of filing: 28.03.2024
(51) Int. Cl.: H01R 35/04

(54) **ROTARY CONNECTOR DEVICE**

(30) Priority: 31.03.2023 JP 2023058944; 09.08.2023 JP 2023130184
(71) Applicant: FURUKAWA ELECTRIC CO., LTD., Tokyo 100-8322 (JP); FURUKAWA AUTOMOTIVE SYSTEMS INC., Shiga 522-0242 (JP)
(72) Inventor: ARAKAWA Hayato, Inukami-gun, Shiga 522-0242 (JP); UTSUNOMIYA Hirofumi, Inukami-gun, Shiga 522-0242 (JP); KAMIYA Kazutaka, Inukami-gun, Shiga 522-0242 (JP)
(74) Representative: Winter, Brandl - Partnerschaft mbB
(86) International application number: PCT/JP2024/012612
(87) International publication number: WO 2024/204523

(57) **Abstract**

This rotary connector device is provided with: a fixed body; a rotating body that has a cylindrical part and is rotatably mounted inside of the fixed body; and one or more flat cables housed in a housing space between the fixed body and the rotating body, wound in one direction on the cylindrical part of the rotating body, and wound in the other direction on an outer wall portion of the fixed body that is disposed opposite only a portion of the cylindrical part of the rotating body.

## Description

### TECHNICAL FIELD

The present disclosure relates to a rotary connector device.

### BACKGROUND ART

Traditionally, a steering wheel installed in an automobile is required to rotate approximately 2.5 turns in both clockwise and counterclockwise directions from a neutral position. Accordingly, a rotary connector device that connects the steering wheel to the vehicle is also required to rotate approximately 2.5 turns in both clockwise and counterclockwise directions from a neutral position.

Recently, a steer-by-wire system, which controls the steered wheel angle using electrical signals without mechanically linking the steering wheel and steered wheels, has been attracting attention. In the steer-by-wire system, the steering wheel is required to rotate approximately 0.5 to 0.8 turns in both clockwise and counterclockwise directions from a neutral position. The steer-by-wire system therefore requires a rotary connector device that accommodates the reduced number of steering wheel turns, unlike a rotary connector device that is employed in a system where the steering wheel and steered wheels are mechanically linked.

For example, Patent Document 1 discloses an electrical connector that mainly includes: a first flat cable and a second flat cable disposed around a space formed between a fixed member and a rotary member; a movable member; a first contact member; and a second contact member. In the electrical connector disclosed in Patent Document 1, the first flat cable is wound so as to run along the inner periphery of the space in the forward direction, turn at a first reversal portion where the winding direction is reversed, and then run along the outer periphery of the space in the reverse direction. Similarly, the second flat cable is wound so as to run along the inner periphery of the space in the reverse direction, turn at a second reversal portion where the winding direction is reversed, and then run along the outer periphery of the space in the forward direction. The movable member moves inside the space as the rotary member rotates. The first contact member is disposed on the movable member and causes the movable member to move in the reverse direction through contact with the first reversal portion of the first flat cable wound on the inner periphery as the rotary member rotates in the reverse direction. Likewise, the second contact member is disposed on the movable member and causes the movable member to move in the forward direction through contact with the second reversal portion of the second flat cable wound on the inner periphery as the rotary member rotates in the forward direction.

However, in a rotary connector device according to conventional technology such as that disclosed in Patent Document 1, an annular space for the flat cables to circulate is provided within a housing of the rotary connector device. This configuration limits the design flexibility of the rotary connector device. Furthermore, the rotary connector device according to the conventional technology must follow the rotational motion of the steering wheel. Accordingly, the flat cables inside the rotary connector device need to be long enough to circulate along walls of the annular space in the rotary connector device. Furthermore, in order to ensure balanced circular movement of the rotary connector device, the reversal portions, which may be referred to as U-turn portions, of the flat cables where the winding direction is reversed are required to be evenly arranged within the annular space. Moreover, the annular space inside the rotary connector device needs to be sufficiently long to allow the flat cables to circulate therearound.

### Citation List

### Patent Document

Patent Document 1: Japanese Unexamined Patent Application, Publication No. 2021-190324

### DISCLOSURE OF THE INVENTION

### Problems to be Solved by the Invention

An object of the present disclosure is to provide a rotary connector device that achieves a reduction in size, an increase in design flexibility, and a reduction in manufacturing costs through a reduction in flat cable length and a reduction in housing volume.

### Means for Solving the Problems

[1] A rotary connector device includes: a fixed member; a rotary member having a hollow cylindrical part and being rotatably mounted inside the fixed member; and one or more flat cables accommodated in an accommodating space between the fixed member and the rotary member, each of the one or more flat cables being wound in one direction on the hollow cylindrical part of the rotary member and in a different direction on an outer wall portion of the fixed member, and the outer wall portion facing only a portion of the hollow cylindrical part of the rotary member.
[2] In the rotary connector device according to [1], each of the one or more flat cables has a reversal portion where the winding direction is reversed from the one direction to the different direction, and the reversal portion is configured to move as the rotary member rotates.
[3] In the rotary connector device according to [1] or [2], each of the one or more flat cables has a first connector electrically connected to one end thereof and a second connector electrically connected to an opposite end thereof, the rotary member has a rotary member connector part, and the first connector is connected to the rotary member connector part, and the fixed member has a fixed member connector part located outside the accommodating space, and the second connector is connected to the fixed member connector part.
[4] In the rotary connector device according to any one of [1] to [3], a rotational angle of the rotary member varies depending on a distance between the outer wall portion of the fixed member and the hollow cylindrical part of the rotary member.
[5] In the rotary connector device according to any one of [1] to [4], the outer wall portion of the fixed member has a linear shape.
[6] In the rotary connector device according to any one of [1] to [5], the reversal portion is visible from outside the rotary member.
[7] In the rotary connector device according to any one of [1] to [6], the outer wall portion of the fixed member in a plan view has an approximately circular outline including a partial circumferential region and another circumferential region that forms an arc of a circle, and a distance from a center of the arc to the partial circumferential region is shorter than a radius of the circle.
[8] The rotary connector device according to any one of [2] to [7] further includes in the accommodating space: a ring part, at least a portion of which is in contact with an edge of each of the one or more flat cables; a first rib rising from the ring part and forming an arc to surround a region of each of the one or more flat cables, the region being wound on the hollow cylindrical part of the rotary member; a circular columnar member disposed inside the reversal portion of at least one of the one or more flat cables, and the circular columnar member being fixed to the ring part and freely rotatable about a rotary shaft; and a second rib disposed outside the reversal portion of the at least one of the one or more flat cables, the second rib forming an arc along a circumferential surface of the circular columnar member and rising from the ring part to face the circular columnar member with the at least one of the one or more flat cables therebetween.

### Effects of the Invention

According to the present disclosure, it is possible to provide a rotary connector device that achieves a reduction in size, an increase in design flexibility, and a reduction in manufacturing costs through a reduction in flat cable length and a reduction in housing volume.

### BRIEF DESCRIPTION OF THE DRAWINGS

FIG. 1 is a perspective view of an example of a rotary connector device according to a first embodiment, as viewed from a side where a rotary member connector part of a rotary member is located.
FIG. 2 is a perspective view of the example of the rotary connector device according to the first embodiment, as viewed from a side where a fixed member connector part of a fixed member is located.
FIG. 3 is a plan view of the example of the rotary connector device according to the first embodiment, as viewed from the side where the rotary member connector part of the rotary member is located.
FIG. 4 is a plan view of the example of the rotary connector device according to the first embodiment, as viewed from the side where the fixed member connector part of the fixed member is located.
FIG. 5 is a side view of the example of the rotary connector device according to the first embodiment.
FIGS. 6A to 6C are each a partially transparent plan view of the example of the rotary connector device according to the first embodiment, as viewed from the side where the rotary member connector part of the rotary member is located.
FIG. 7 is a partially transparent plan view of another example of the rotary connector device according to the first embodiment, as viewed from the side where the rotary member connector part of the rotary member is located.
FIGS. 8A to 8C are each a partially transparent plan view of an example of a rotary connector device according to a second embodiment, as viewed from a side where a rotary member connector part of a rotary member is located.
FIGS. 9A to 9C are each a partially transparent plan view of another example of the rotary connector device according to the second embodiment, as viewed from the side where the rotary member connector part of the rotary member is located.
FIGS. 10A to 10C are each a partially transparent plan view of another example of the rotary connector device according to the second embodiment, as viewed from the side where the rotary member connector part of the rotary member is located.
FIGS. 11A to 11C are each a partially transparent plan view of an example of a rotary connector device according to a third embodiment, as viewed from a side where a rotary member connector part of a rotary member is located.
FIGS. 12A to 12C are each a partially transparent plan view of an example of a rotary connector device according to a fourth embodiment, as viewed from a side where a rotary member connector part of a rotary member is located.
FIG. 13 is a partially transparent plan view of an example of a rotary connector device according to a fifth embodiment, as viewed from a side where a rotary member connector part of a rotary member is located.
FIG. 14 is a partially transparent plan view of an example of a rotary connector device according to a sixth embodiment, as viewed from a side where a rotary member connector part of a rotary member is located.

### PREFERRED MODE FOR CARRYING OUT THE INVENTION

The following describes the present disclosure in detail based on some embodiments.

The inventors of the present disclosure made intensive studies on a rotary connector device. As a result, the inventors found that it is possible to achieve a reduction in size, an increase in design flexibility, and a reduction in manufacturing costs through a reduction in flat cable length and a reduction in housing volume, by using a portion of an outer wall part of a fixed member as an area where a flat cable wound in one direction on a hollow cylindrical part of a rotary member is wound in a different direction. Based on the finding, the inventors completed the present invention.

A rotary connector device according to an embodiment includes: a fixed member; a rotary member having a hollow cylindrical part and being rotatably mounted inside the fixed member; and one or more flat cables accommodated in an accommodating space between the fixed member and the rotary member, each of the one or more flat cables being wound in one direction on the hollow cylindrical part of the rotary member and in a different direction on an outer wall portion of the fixed member, and the outer wall portion facing only a portion of the hollow cylindrical part of the rotary member.

### (First Embodiment)

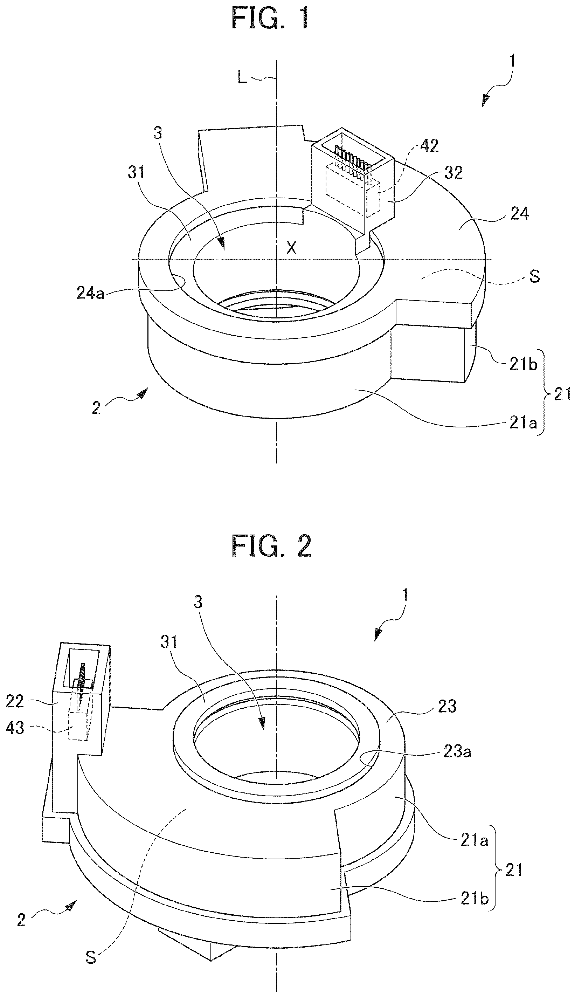

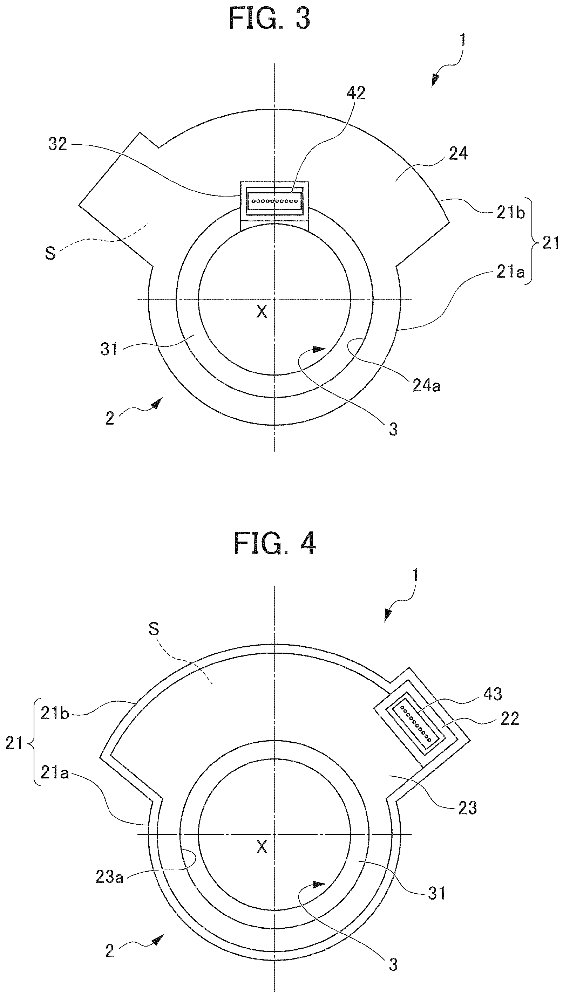

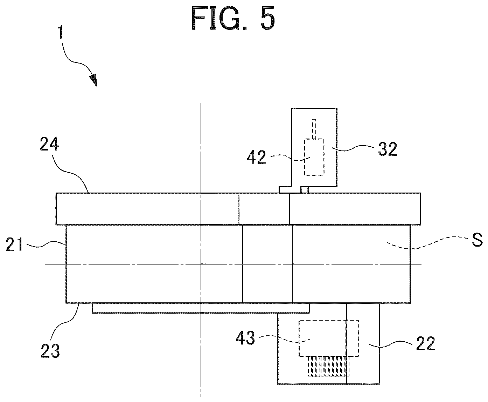

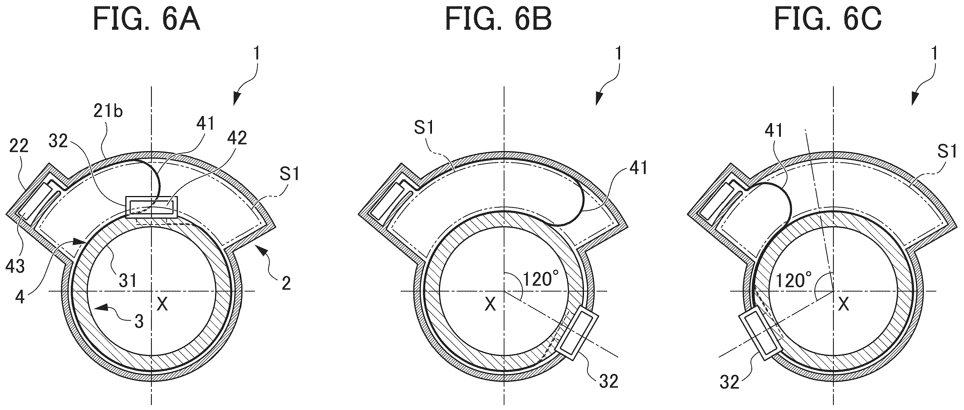

FIG. 1 is a perspective view of an example of a rotary connector device according to a first embodiment, as viewed from a side where a rotary member connector part of a rotary member is located. FIG. 2 is a perspective view of the example of the rotary connector device, as viewed from a side where a fixed member connector part of a fixed member is located. FIG. 3 is a plan view of the example of the rotary connector device, as viewed from the side where the rotary member connector part is located. FIG. 4 is a plan view of the example of the rotary connector device, as viewed from the side where the fixed member connector part is located. FIG. 5 is a side view of the example of the rotary connector device. FIGS. 6A to 6C are each a partially transparent plan view of the example of the rotary connector device, as viewed from the side where the rotary member connector part is located. In FIGS. 6A to 6C, a first plate part 23 of a fixed member 2 is shown transparent for convenience.

As shown in FIGS. 1 to 6, a rotary connector device 1 according to the first embodiment includes the fixed member 2, a rotary member 3, and one or more flat cables 4. The rotary connector device 1 is installed in an automobile and electrically connects electronic devices provided on the fixed member 2 side to electronic devices provided on the rotary member 3 side. The fixed member 2 does not rotate in conjunction with the rotation of a steering wheel that is not shown. The rotary member 3 rotates in conjunction with the rotation of the steering wheel. The steering wheel is rotatably mounted in a vehicle that is not shown.

The fixed member 2 that forms the rotary connector device 1 includes a tubular part 21 having an arc-shaped outer wall portion 21a and an outer wall portion 21b. The arc-shaped outer wall portion 21a is disposed to face only a portion of a hollow cylindrical part 31 of the rotary member 3 along the circumferential direction, and the outer wall portion 21b is disposed to face only a portion of the hollow cylindrical part 31 of the rotary member 3 and protrudes outward in the radial direction from the arc-shaped outer wall portion 21a. The tubular part 21 forms an outer side wall of the rotary connector device 1.

The outer wall portion 21b is where each flat cable 4 is wound in a different direction as described below. The outer wall portion 21b protrudes outward in the radial direction from two ends of the arc-shaped outer wall portion 21a, and the distance between the outer wall portion 21b and the hollow cylindrical part 31 of the rotary member 3 is greater than the distance between the arc-shaped outer wall portion 21a and the hollow cylindrical part 31. The outer wall portion 21b is not annular. In other words, the outer wall portion 21b is non-annular.

The fixed member 2 also includes the first plate part 23 and a second plate part 24. The first plate part 23 is connected to the tubular part 21 and has a fixed member connector part 22, and the second plate part 24 is connected to the tubular part 21 and faces the first plate part 23. For example, the first plate part 23 and the second plate part 24 have substantially the same shape, and are each vertically connected to the tubular part 21.

The fixed member connector part 22 provided on the first plate part 23 has a tubular shape and is connected to an opening, not shown, formed at the tubular part 21 to allow communication between the inside and the outside of the rotary connector device 1. The fixed member connector part 22 extends away from a main surface of the second plate part 24. A second connector 43 of the flat cable 4, which is described below, is mounted inside the fixed member connector part 22.

The first plate part 23 has a first opening 23a for inserting the hollow cylindrical part 31 of the rotary member 3. The second plate part 24 also has a second opening 24a for inserting the hollow cylindrical part 31.

The rotary member 3 that forms the rotary connector device 1 has the hollow cylindrical part 31 and is rotatably mounted inside the fixed member 2. The hollow cylindrical part 31 is inserted into the first opening 23a formed at the first plate part 23 and the second opening 24a formed at the second plate part 24 of the fixed member 2. The hollow cylindrical part 31 forms an inner side wall of the rotary connector device 1.

A steering shaft that is not shown connected to the steering wheel that is not shown is inserted into the hollow cylindrical part 31. The steering shaft rotates around a rotation axis X as the steering wheel rotates, and the rotary member 3 rotates around the rotation axis X relative to the fixed member 2 as the steering shaft rotates. The rotary member 3 rotates approximately 0.5 to 0.8 turns in both clockwise and counterclockwise directions from a neutral position, which is described below. The fixed member 2 does not rotate as the steering shaft rotates.

The rotary member 3 has a rotary member connector part 32 provided at an end of the hollow cylindrical part 31 that is adjacent to the second plate part 24 of the fixed member 2. The rotary member connector part 32 has a tubular shape and is connected to an opening, not shown, formed at the hollow cylindrical part 31 to allow communication between the inside and the outside of the rotary connector device 1. The rotary member connector part 32 extends away from an end surface of the hollow cylindrical part 31. In the rotary connector device 1, the fixed member connector part 22 of the fixed member 2 and the rotary member connector part 32 of the rotary member 3 are provided on opposite sides. A first connector 42 of the flat cable 4, which is described below, is mounted inside the rotary member connector part 32.

FIG. 6A shows a state in which the rotary member connector part 32 is in the neutral position, FIG. 6B shows a state in which the rotary member connector part 32 has rotated 120 degrees clockwise, and FIG. 6C shows a state in which the rotary member connector part 32 has rotated 120 degrees counterclockwise.

One or more flat cables 4 are accommodated in an accommodating space S between the fixed member 2 and the rotary member 3. In the present embodiment, one flat cable 4 is accommodated. As shown in FIGS. 6A to 6C, the flat cable 4 is wound in one direction on the hollow cylindrical part 31 of the rotary member 3 and in the different direction on the outer wall portion 21b of the fixed member 2. In the present embodiment, the flat cable 4 is wound in the clockwise direction on the hollow cylindrical part 31 and in the counterclockwise direction on the outer wall portion 21b.

The outer wall portion 21b of the fixed member 2 is an area where the flat cable 4 wound in the one direction on the hollow cylindrical part 31 of the rotary member 3 is wound in the different direction. The outer wall portion 21b, which is arc-shaped, is not disposed to face the entire circumferential surface of the hollow cylindrical part 31 of the rotary member 3 along the circumferential direction, but is disposed to face only a portion of the hollow cylindrical part 31 of the rotary member 3 along the circumferential direction. That is, the flat cable 4 wound in the one direction on the hollow cylindrical part 31 of the rotary member 3 is not wound in the different direction along the entire circumferential surface of the fixed member 2, but is wound in the different direction on a portion of the fixed member 2.

As shown in FIGS. 6A to 6C, the flat cable 4 has a reversal portion 41 where the winding direction is reversed from the one direction to the different direction. The reversal portion 41 is configured to move clockwise and counterclockwise as the rotary member 3 rotates. The reversal portion 41 is also referred to as a U-turn portion.

A part of the rotary member 3 may have an opening that is not shown. In this case, the reversal portion 41 is visible from outside the rotary member 3 through the opening of the rotary member 3.

The reversal portion 41 of the flat cable 4 is accommodated in a non-annular space S1 defined by the outer wall portion 21b, the portion of the hollow cylindrical part 31 that faces the outer wall portion 21b, the first plate part 23, and the second plate part 24, and is configured to move inside the non-annular space S1. A length dimension of the non-annular space S1 is set as appropriate according the range of rotational angle of the hollow cylindrical part 31 and other factors. A width dimension of the non-annular space S1 is substantially constant. In the present embodiment, the length dimension of the non-annular space S1 is a circumferential dimension around the central axis X, and the width dimension of the non-annular space S1 is a dimension perpendicular to the length direction of the non-annular space S1. The non-annular space S1 is not an annular space, but is a partially cut annular space out of a virtual annular space surrounding the hollow cylindrical part 31 of the rotary member 3. In the present embodiment, the non-annular space S1 is an arc-shaped space.

The flat cable 4 has the first connector 42 electrically connected to one end thereof and the second connector 43 electrically connected to an opposite end thereof. The first connector 42, which is electrically connected to the one end of the flat cable 4, is inserted and mounted in the tubular rotary member connector part 32, and thus is connected to the rotary member connector part 32 of the rotary member 3. The second connector 43, which is electrically connected to the opposite end of the flat cable 4, is inserted and mounted in the tubular fixed member connector part 22, and thus is connected to the fixed member connector part 22 of the fixed member 2. The fixed member connector part 22 is provided on the outer side of one end of the outer wall portion 21b, and is located outside the accommodating space S, i.e., outside the non-annular space S1.

The first connector 42, which is electrically connected to the flat cable 4, is electrically connected to various steering-side electronic devices such as airbag devices. The second connector 43, which is electrically connected to the flat cable 4, is electrically connected to various vehicle-side electronic devices such as a vehicle control device. The various vehicle-side electronic devices and the various steering-side electronic devices are electrically connected to each other via the flat cable 4 of the rotary connector device 1.

As shown in FIG. 6A, when the rotary member connector part 32 of the rotary connector device 1 is in the neutral position, the center of a length dimension of the rotary member connector part 32 is aligned with a reference line L passing through the rotation axis X and extending in the up-down direction. The length dimension of the rotary member connector part 32 refers to a dimension of the rotary member connector part 32 in a direction perpendicular to the radial direction of the hollow cylindrical part 31.

As shown in FIGS. 6C, 6A and 6B, in a case where the rotary member connector part 32 rotates clockwise, the flat cable 4 is wound onto the hollow cylindrical part 31 of the rotary member 3 and the outer wall portion 21b of the fixed member 2, and the reversal portion 41 of the flat cable 4 moves clockwise around the rotation axis X inside the non-annular space S1. As a result, a length of a portion of the flat cable 4 wound in the one direction on the hollow cylindrical part 31 of the rotary member 3 and a length of a portion of the flat cable 4 wound in the different direction on the outer wall portion 21b of the fixed member 2 increase.

As shown in FIGS. 6B, 6A and 6C, in a case where the rotary member connector part 32 rotates counterclockwise, the flat cable 4 is unwound from the hollow cylindrical part 31 of the rotary member 3 and the outer wall portion 21b of the fixed member 2, and the reversal portion 41 of the flat cable 4 moves counterclockwise around the rotation axis X inside the non-annular space S1. As a result, the length of the portion of the flat cable 4 wound in the one direction on the hollow cylindrical part 31 of the rotary member 3 and the length of the portion of the flat cable 4 wound in the different direction on the outer wall portion 21b of the fixed member 2 decrease.

As described above, as the steering wheel that is not shown rotates, the hollow cylindrical part 31 of the rotary member 3 rotates, and the flat cable 4 is wound or unwound onto or from the hollow cylindrical part 31 and the outer wall portion 21b. The rotational angle of the rotary member 3 varies depending on the distance between the outer wall portion 21b of the fixed member 2 and the hollow cylindrical part 31 of the rotary member 3. That is, the angle of movement of the flat cable 4 around the rotation axis X varies depending on the distance between the outer wall portion 21b of the fixed member 2 and the hollow cylindrical part 31 of the rotary member 3. Because of this configuration and the movement of the flat cable 4 inside the non-annular space S1, the rotary connector device 1 is suitable for use in a steering wheel that rotates approximately 0.5 to 0.8 turns in both clockwise and counterclockwise directions from a neutral position.

As described above, in the rotary connector device 1, the flat cable 4 moves inside the non-annular space S1 as the rotary member 3 rotates in conjunction with the rotation of the steering wheel that is not shown. That is, the flat cable in the rotary connector device according to the conventional technology moves inside an annular space, whereas the flat cable 4 in the rotary connector device 1 moves inside the non-annular space S1 rather than in an annular space. Thus, in the rotary connector device 1, the travel distance of the flat cable 4 is shorter. This configuration allows for a reduction in size of the rotary connector device 1 and an increase in design flexibility. This configuration also allows for a reduction in the volume of the rotary connector device 1 as well as a reduction in the length of the flat cable 4 required for the rotary connector device 1, resulting in a reduction in manufacturing costs of the rotary connector device 1.

Furthermore, in the rotary connector device 1, the flat cable 4 moves inside the non-annular space S1. This configuration allows for an increase in flatness ratio of the transverse section shape of a steering column that is applied to the rotary connector device 1. Having a flat shape, the steering column is suitable for use with an irregularly shaped steering wheel. The rotary connector device 1 is therefore suitable for use in a steer-by-wire system. The flat shape of the steering column also has the advantages of increasing the visibility of a dashboard panel (so-called instrument panel) located above the steering column for a driver driving the vehicle, and of expanding the space under the steering column and thus increasing the footwell of the driver's seat. Thus, the configuration described above allows for an increase in design flexibility of the vehicle including the rotary connector device 1.

According to the first embodiment described above, a portion of the outer wall part of the fixed member is used as an area where the flat cable wound in the one direction on the hollow cylindrical part of the rotary member is wound in the different direction, making it possible for the rotary connector device to achieve a reduction in size, an increase in design flexibility, and a reduction in manufacturing costs through a reduction in flat cable length and a reduction in housing volume.

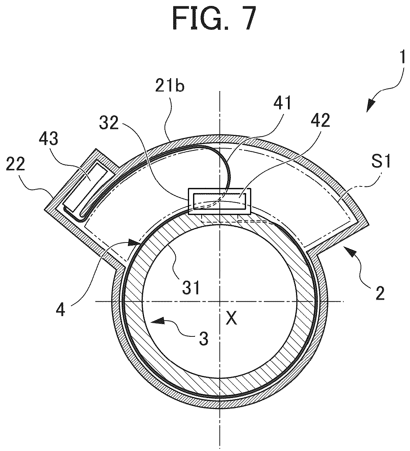

Note that the connection point where the flat cable 4 of the foregoing embodiment is connected to the second connector 43 attached to the fixed member connector part 22 is an end of the second connector 43 that is adjacent to the reversal portion 41, but no particular limitations are placed on the connection point. For example, as shown in FIG. 7, the flat cable 4 may be connected to an end of the second connector 43 that is far from the reversal portion 41.

### (Second Embodiment)

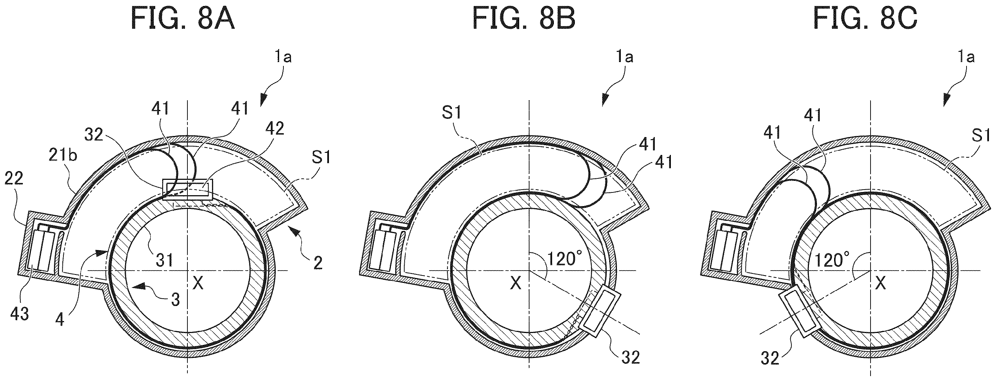

FIGS. 8A to 8C are each a partially transparent plan view of an example of a rotary connector device according to a second embodiment, as viewed from a side where a rotary member connector part of a rotary member is located. FIG. 8A shows a state in which the rotary member connector part 32 is in the neutral position, FIG. 8B shows a state in which the rotary member connector part 32 has rotated 120 degrees clockwise, and FIG. 8C shows a state in which the rotary member connector part 32 has rotated 120 degrees counterclockwise.

Note that in embodiments described below, the same components as those of the rotary connector device 1 according to the first embodiment are denoted by the same reference numerals as in the first embodiment, and descriptions will be omitted or simplified where deemed redundant.

A rotary connector device 1a according to the second embodiment has basically the same configuration as the rotary connector device 1 according to the first embodiment, except that the rotary connector device 1a is provided with a plurality of flat cables. The following therefore mainly describes differences in configuration.

As shown in FIGS. 8A to 8C, the rotary connector device 1a according to the second embodiment includes two flat cables 4. Ends of the two flat cables 4 are collectively connected to a first connector 42. A single first connector 42, to which these ends of the two flat cables 4 are connected, is inserted and mounted in the rotary member connector part 32 of the rotary member 3, and thus is connected to the rotary member connector part 32. Opposite ends of the two flat cables 4 are respectively connected to second connectors 43. Two second connectors 43, to which the opposite ends of the two flat cables 4 are respectively connected, are inserted and mounted in the fixed member connector part 22, and thus are connected to the fixed member connector part 22 of the fixed member 2.

Two reversal portions 41 facing in the same direction are accommodated in the non-annular space S1 and spaced by a predetermined distance in the length direction of the non-annular space S1. As the rotary member connector part 32 rotates, the two reversal portions 41 move inside the non-annular space S1 while facing in the same direction and keeping the predetermined distance therebetween in the length direction of the non-annular space S1.

According to the second embodiment described above, a rotary connector device including a plurality of flat cables also achieves a reduction in size, an increase in design flexibility, and a reduction in manufacturing costs through a reduction in flat cable length and a reduction in housing volume.

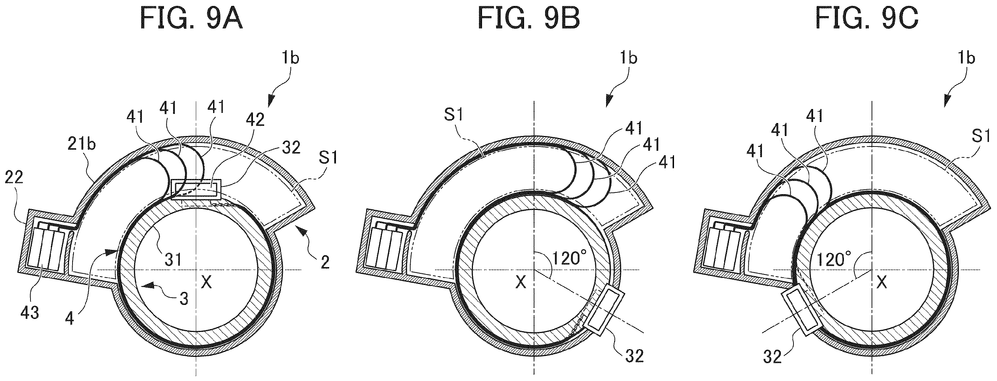

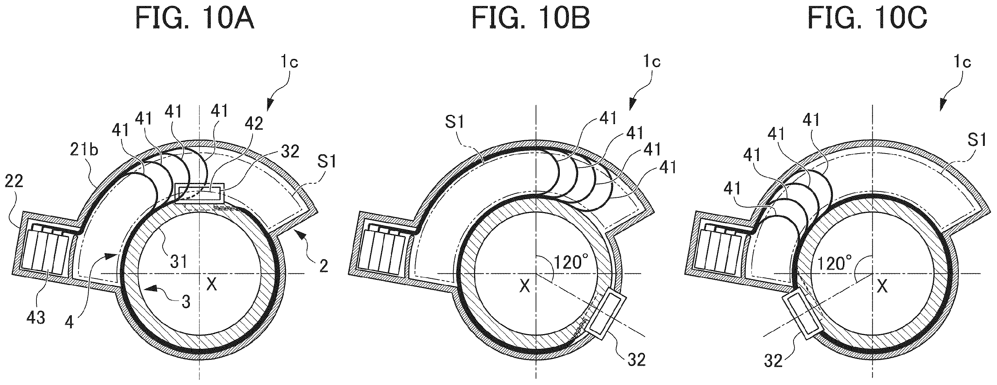

Note that FIGS. 8A to 8C show an example of a rotary connector device including two flat cables, but no particular limitations are placed on the number of flat cables provided in the rotary connector device. For example, a rotary connector device 1b including three flat cables shown in FIGS. 9A to 9C and a rotary connector device 1c including four flat cables shown in FIGS. 10A to 10C produce basically the same effects as the rotary connector device 1a including two flat cables shown in FIGS. 8A to 8C.

### (Third Embodiment)

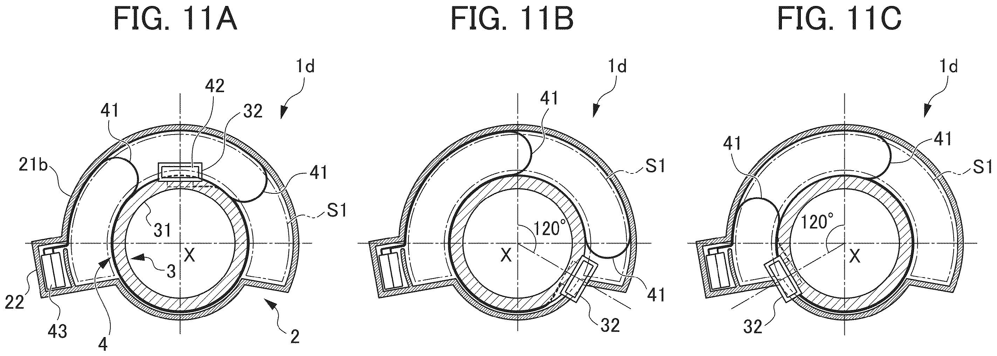

FIGS. 11A to 11C are each a partially transparent plan view of an example of a rotary connector device according to a third embodiment, as viewed from a side where a rotary member connector part of a rotary member is located. FIG. 11A shows a state in which the rotary member connector part 32 is in the neutral position, FIG. 11B shows a state in which the rotary member connector part 32 has rotated 120 degrees clockwise, and FIG. 11C shows a state in which the rotary member connector part 32 has rotated 120 degrees counterclockwise.

A rotary connector device 1d according to the third embodiment has basically the same configuration as the rotary connector device 1 according to the first embodiment, except that the non-annular space S1 in the rotary connector device 1d has a different length dimension. The following therefore mainly describes differences in configuration.

In the rotary connector device 1 according to the first embodiment shown in FIGS. 6A to 6C, the length dimension of the arc-shaped non-annular space S1 surrounding the hollow cylindrical part 31 of the rotary member 3 is less than half of the length dimension of the virtual annular space surrounding the hollow cylindrical part 31 of the rotary member 3. By contrast, in the rotary connector device 1d according to the third embodiment shown in FIGS. 11A to 11C, the length dimension of the non-annular space S1 is approximately half of the length dimension of the virtual annular space surrounding the hollow cylindrical part 31 of the rotary member 3.

Even though the non-annular space S1 in the rotary connector device 1d has a length dimension increased to approximately half of the length dimension of the virtual annular space surrounding the hollow cylindrical part 31, the rotary connector device 1d produces basically the same effects as the rotary connector device 1.

According to the third embodiment described above, a rotary connector device in which the non-annular space S1 has an increased length dimension also achieves a reduction in size, an increase in design flexibility, and a reduction in manufacturing costs through a reduction in flat cable length and a reduction in housing volume.

### (Fourth Embodiment)

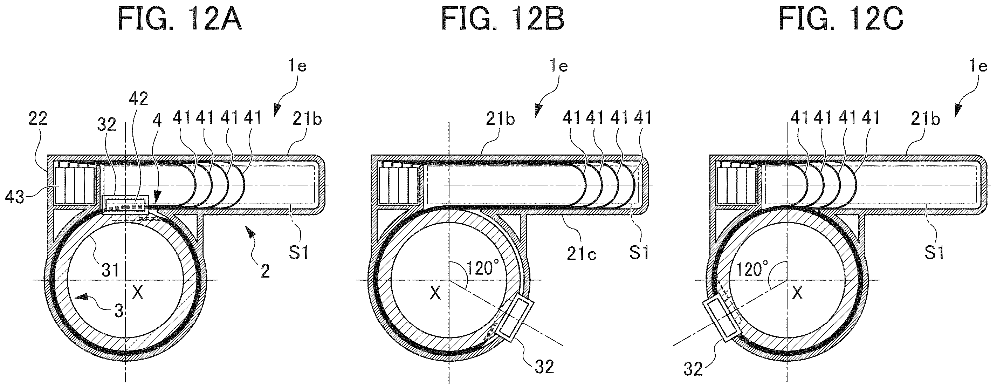

FIGS. 12A to 12C are each a partially transparent plan view of an example of a rotary connector device according to a fourth embodiment, as viewed from a side where a rotary member connector part of a rotary member is located. FIG. 12A shows a state in which the rotary member connector part 32 is in the neutral position, FIG. 12B shows a state in which the rotary member connector part 32 has rotated 120 degrees clockwise, and FIG. 12C shows a state in which the rotary member connector part 32 has rotated 120 degrees counterclockwise.

A rotary connector device 1e according to the fourth embodiment has basically the same configuration as the rotary connector device 1 according to the first embodiment, except that the non-annular space S1 in the rotary connector device 1e has a different shape. The following therefore mainly describes differences in configuration.

The non-annular space S1 in the rotary connector device 1 according to the first embodiment shown in FIGS. 6A to 6C is an arc-shaped space surrounding a portion of the hollow cylindrical part 31. By contrast, the non-annular space S1 in the rotary connector device 1e according to the fourth embodiment shown in FIGS. 12A to 12C is a linear space.

As shown in FIGS. 12A to 12C, each flat cable 4 of the rotary connector device 1e is not only wound in one direction on the hollow cylindrical part 31 of the rotary member 3 and in a different direction on the outer wall portion 21b of the fixed member 2 but also wound in the one direction on an inner-side outer wall portion 21c. The outer wall portion 21b of the fixed member 2 has a linear shape. That is, in the tubular part 21 of the rotary connector device 1e, the outer wall portion 21b, where each flat cable 4 wound in the one direction on the hollow cylindrical part 31 of the rotary member 3 is wound in the different direction, has a linear shape. The inner-side outer wall portion 21c, which is a portion of the tubular part 21, faces the outer wall portion 21b and has a linear shape.

The configuration of the rotary connector device 1e in which the non-annular space S1 is a linear space not only produces the same effects as the rotary connector device 1 but also allows for a further increase in the flatness ratio of the cross-sectional shape of a steering column that is applied to the rotary connector device 1e. Thus, the configuration described above allows for a further increase in design flexibility of the vehicle including the rotary connector device 1e.

According to the fourth embodiment described above, a rotary connector device in which the non-annular space S1 has a linear shape in the length direction also achieves a reduction in size, an increase in design flexibility, and a reduction in manufacturing costs through a reduction in flat cable length and a reduction in housing volume.

### (Fifth Embodiment)

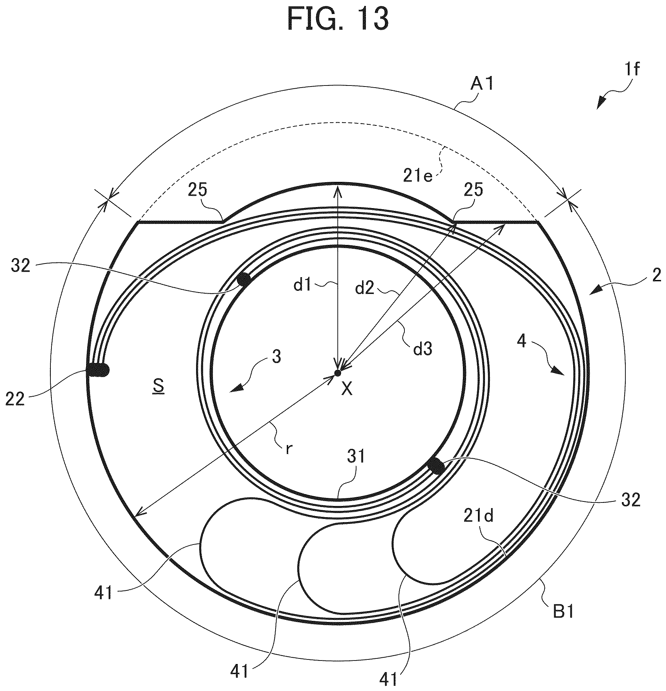

FIG. 13 is a partially transparent plan view of an example of a rotary connector device according to a fifth embodiment, as viewed from a side where a rotary member connector part of a rotary member is located. FIG. 13 shows a state in which the rotary member connector part 32 is in the neutral position. In FIG. 13, the first connector 42 and the second connector 43 are not shown for convenience.

A rotary connector device 1f according to the fifth embodiment has basically the same configuration as the rotary connector device 1 according to the first embodiment, except that an outer wall portion 21d of the rotary connector device 1f has a different shape than the arc-shaped outer wall portion 21a and the outer wall portion 21b of the rotary connector device 1 according to the first embodiment. The following therefore mainly describes differences in configuration.

As shown in FIG. 13, the outer wall portion 21d of the fixed member 2 in a plan view has an approximately circular outline including a partial circumferential region A1 and another circumferential region B1 that forms an arc of a circle 21e. Distances d1, d2, and d3 from the center of the arc to the outer wall portion 21d in the region A1 are shorter than a radius r of the circle 21e in the region B1. The approximately circular outline refers to a concept that encompasses all outlines each including a plurality of circumferential regions that form a circular outline except for at least one circumferential region. The outer wall portion 21d in a plan view has a shape corresponding to a complete circle (the circle 21e) with a cutout in the range of the region A1.

The shape of the region A1 of the outer wall portion 21d has stepped portions 25. Portions of the accommodating space S that correspond to the stepped portions 25 therefore form edges. Furthermore, the rotary connector device 1f may have a plurality of rotary member connector parts 32 provided at different positions in the circumferential direction, rather than a single rotary member connector part 32. For example, the rotary connector device 1f may have two rotary member connector parts 32 positioned 180° apart from each other in the circumferential direction as shown in FIG. 13. In this case, some of a plurality of flat cables 4 are connected to one of the rotary member connector part 32 and the rest of the flat cables 4 are connected to the other rotary member connector part 32.

As described above, the outer wall portion 21d of the rotary connector device 1f has a shape corresponding to the circle 21e with a cutout in the range of the region A1. The accommodating space S is therefore narrower in the range of the region A1 than in the range of the region B1, and accordingly space that is reserved for mounting the rotary connector device 1f can be smaller. For example, the rotary connector device 1f is mounted in a vehicle with the range of the region A1 positioned at the top as shown in FIG. 13, so that other devices such as a monitor and various instruments can be disposed in or extend to the cutout region inside the circle 21e.

According to the fifth embodiment described above, a rotary connector device in which an outer wall portion of a fixed member has an approximately circular cylindrical shape also achieves a reduction in size, an increase in design flexibility, and a reduction in manufacturing costs through a reduction in flat cable length and a reduction in housing volume. Furthermore, such a rotary connector device, when mounted in a vehicle, allows other devices such as a monitor and various instruments to be disposed in or extend to the cutout region inside the circle 21e, and thus allows space around the automobile instrument panel that is reserved for the rotary connector device to be smaller.

### (Sixth Embodiment)

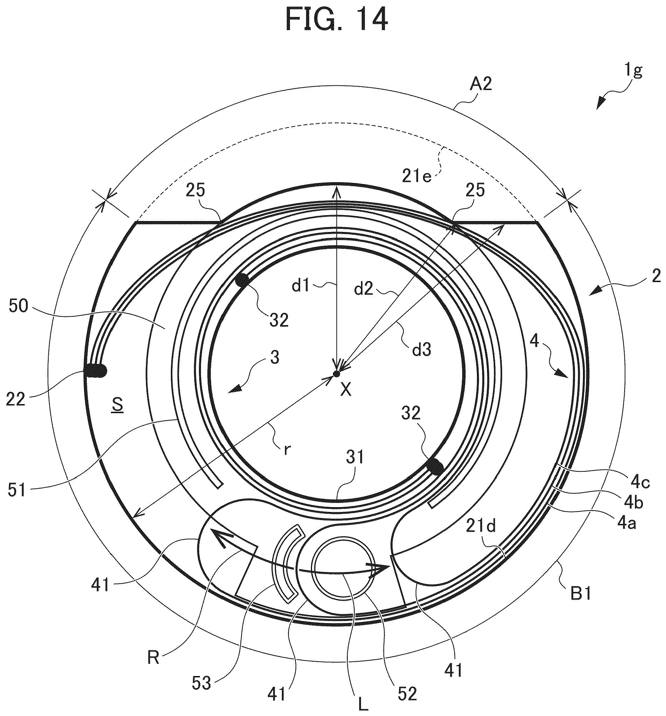

FIG. 14 is a partially transparent plan view of an example of a rotary connector device according to a sixth embodiment, as viewed from a side where a rotary member connector part of a rotary member is located. FIG. 14 shows a state in which the rotary member connector part 32 is in the neutral position. In FIG. 14, the first connector 42 and the second connector 43 are not shown for convenience.

A rotary connector device 1g according to the sixth embodiment has basically the same configuration as the rotary connector device 1f according to the fifth embodiment, except that the rotary connector device 1g has a configuration additionally including a ring part 50, a first rib 51, a circular columnar member 52, and a second rib 53. The following therefore mainly describes differences in configuration. The present embodiment is described by showing an example in which the flat cables 4 include a first flat cable 4a, a second flat cable 4b, and a third flat cable 4c. However, the number of the flat cables 4 is not limited to three.

As shown in FIG. 14, the rotary connector device 1g further includes the ring part 50, the first rib 51, the circular columnar member 52, and the second rib 53 in the accommodating space S.

The ring part 50 is a ring-shaped and plate-shaped member disposed to surround the rotary member 3 in the accommodating space S, and at least a portion of the ring part 50 is in contact with edges of the flat cables 4 (the first flat cable 4a, the second flat cable 4b, and the third flat cable 4c). A portion of the ring part 50 on a side of the fixed member 2 opposite to a side having the stepped portions 25 (lower portion on the plane in FIG. 14) extends to the fixed member 2. The ring part 50 is independent of both the fixed member 2 and the rotary member 3, and is rotatable around the rotation axis X.

The first rib 51 is a rib-shaped member rising from the ring part 50 and forming an arc to surround a region of each flat cable 4 that is wound on the hollow cylindrical part 31 of the rotary member 3. The first rib 51 faces the hollow cylindrical part 31 of the rotary member 3 with the flat cables 4 therebetween. The height of the first rib 51 rising from the ring part 50 is approximately the same as the width of the flat cables 4.

The circular columnar member 52 is disposed inside the reversal portion 41 of at least one of the flat cables 4 (the second flat cable 4b in the present embodiment). The circular columnar member 52 is fixed to the ring part 50 and freely rotatable about a rotary shaft that is not shown. The height of the circular columnar member 52 from the ring part 50 in the axial direction is approximately the same as the width of the flat cables 4.

The second rib 53 is a rib-shaped member disposed inside the reversal portion 41 of the first flat cable 4a and outside the reversal portion 41 of the second flat cable 4b. The second rib 53 forms an arc along the circumferential surface of the circular columnar member 52 and rises from the ring part 50 to face the circular columnar member 52 with the second flat cable 4b therebetween. The height of the second rib 53 rising from the ring part 50 is approximately the same as the width of the flat cables 4.

The first rib 51, the circular columnar member 52, and the second rib 53 provided on the ring part 50 rotate together around the rotation axis X. The first flat cable 4a, the second flat cable 4b, and the third flat cable 4c circulate around the rotation axis X and move in directions indicated by arrows L and R.

As the rotary member 3 of the rotary connector device 1g rotates counterclockwise, the reversal portion 41 of each flat cable 4 moves in the direction indicated by the arrow L, and the inner surface of the reversal portion 41 of the second flat cable 4b comes into contact with and wraps around the circular columnar member 52 to pull the circular columnar member 52 in the direction indicated by the arrow L while causing the circular columnar member 52 to rotate. Thus, the ring part 50 rotates counterclockwise. While the ring part 50 is rotating counterclockwise with the movement of the reversal portion 41 of the second flat cable 4b, the first rib 51, the circular columnar member 52, the second rib 53, and the reversal portions 41 of the first flat cable 4a, the second flat cable 4b, and the third flat cable 4c all rotate counterclockwise. The positional relationship therebetween therefore remains unchanged.

As the rotary member 3 of the rotary connector device 1g rotates clockwise, the reversal portion 41 of each flat cable 4 moves in the direction indicated by the arrow R. The outer surface of the reversal portion 41 of the second flat cable 4b comes into contact with the second rib 53 and pushes the inner surface of the arc of the second rib 53 while sliding thereon. Thus, the ring part 50 rotates clockwise. While the ring part 50 is rotating clockwise with the movement of the reversal portion 41 of the second flat cable 4b, the first rib 51, the circular columnar member 52, the second rib 53, and the reversal portions 41 of the first flat cable 4a, the second flat cable 4b, and the third flat cable 4c all rotate clockwise. The positional relationship therebetween therefore remains unchanged.

The first rib 51 prevents the flat cables 4 from coming loose from the hollow cylindrical part 31 of the rotary member 3. The circular columnar member 52 and the second rib 53 maintain the shape of the reversal portion 41 of the second flat cable 4b. With the shape of the reversal portion 41 of the second flat cable 4b maintained, the reversal portions 41 of the first flat cable 4a and the third flat cable 4c, which are disposed adjacent to the second flat cable 4b, are also prevented from being easily deformed. Thus, the action of the first rib 51, the circular columnar member 52, and the second rib 53 maintains the orientation of the flat cables 4. Moreover, even when the rotary member 3 of the rotary connector device 1g is rotating, the positional relationship between the relevant components remains unchanged as described above, and thus the effect of maintaining the orientation of the flat cables 4 is sustained. As a result, the rotary connector device 1g can reduce loosening of the flat cables 4.

According to the sixth embodiment described above, as in the case of the fifth embodiment, a rotary connector device achieves a reduction in size, an increase in design flexibility, and a reduction in manufacturing costs through a reduction in flat cable length and a reduction in housing volume. Furthermore, such a rotary connector device, when mounted in a vehicle, allows other devices such as a monitor and various instruments to be disposed in or extend to the cutout region inside the circle 21e, and thus allows space around the automobile instrument panel that is reserved for the rotary connector device to be smaller. Furthermore, with the ring part, the first rib, the circular columnar member, and the second rib provided in the accommodating space, the rotary connector device can reduce loosening of the flat cables.

Although some embodiments have been described above, the present invention is not limited to the embodiments described above and encompasses all aspects within the spirit of the present disclosure and the scope of the appended claims. A variety of modifications and variations can be made without departing from the scope of the present disclosure.

### EXPLANATION OF REFERENCE NUMERALS

1, 1a, 1b, 1c, 1d, 1e, 1f, 1g: Rotary connector device
2: Fixed member
21: Tubular part
21a: Arc-shaped outer wall portion
21b: Outer wall portion
21c: Inner-side outer wall portion
21d: Outer wall portion
21e: Circle
22: Fixed member connector part
23: First plate part
23a: First opening
24: Second plate part
24a: Second opening
25: Stepped portion
3: Rotary member
31: Hollow cylindrical part
32: Rotary member connector part
4: Flat cable
4a: First flat cable
4b: Second flat cable
4c: Third flat cable
41: Reversal portion
42: First connector
43: Second connector
50: Ring part
51: First rib
52: Circular columnar member
53: Second rib
X: Rotation axis
L: Reference line
S: Accommodating space
S1: Non-annular space
A1, A2, B1, B2: Region
d1, d2, d3: Distance

## Claims

1. A rotary connector device comprising:
a fixed member;
a rotary member having a hollow cylindrical part and being rotatably mounted inside the fixed member; and
one or more flat cables accommodated in an accommodating space between the fixed member and the rotary member, each of the one or more flat cables being wound in one direction on the hollow cylindrical part of the rotary member and in a different direction on an outer wall portion of the fixed member, and the outer wall portion facing only a portion of the hollow cylindrical part of the rotary member.

2. The rotary connector device according to claim 1, wherein
each of the one or more flat cables has a reversal portion where the winding direction is reversed from the one direction to the different direction, and
the reversal portion is configured to move as the rotary member rotates.

3. The rotary connector device according to claim 1 or 2, wherein
each of the one or more flat cables has a first connector electrically connected to one end thereof and a second connector electrically connected to an opposite end thereof,
the rotary member has a rotary member connector part, and the first connector is connected to the rotary member connector part, and
the fixed member has a fixed member connector part located outside the accommodating space, and the second connector is connected to the fixed member connector part.

4. The rotary connector device according to claim 1 or 2, wherein a rotational angle of the rotary member varies depending on a distance between the outer wall portion of the fixed member and the hollow cylindrical part of the rotary member.

5. The rotary connector device according to claim 1 or 2, wherein the outer wall portion of the fixed member has a linear shape.

6. The rotary connector device according to claim 2, wherein the reversal portion is visible from outside the rotary member.

7. The rotary connector device according to claim 1 or 2, wherein the outer wall portion of the fixed member in a plan view has an approximately circular outline including a partial circumferential region and another circumferential region that forms an arc of a circle, and a distance from a center of the arc to the partial circumferential region is shorter than a radius of the circle.

8. The rotary connector device according to claim 2, further comprising in the accommodating space:
a ring part, at least a portion of which is in contact with an edge of each of the one or more flat cables;
a first rib rising from the ring part and forming an arc to surround a region of each of the one or more flat cables, the region being wound on the hollow cylindrical part of the rotary member;
a circular columnar member disposed inside the reversal portion of at least one of the one or more flat cables, and the circular columnar member being fixed to the ring part and freely rotatable about a rotary shaft; and
a second rib disposed outside the reversal portion of the at least one of the one or more flat cables, the second rib forming an arc along a circumferential surface of the circular columnar member and rising from the ring part to face the circular columnar member with the at least one of the one or more flat cables therebetween.
